# EUROPÄISCHE PATENTSCHRIFT

(11) **EP 3 736 433 B1**
(45) Veröffentlichungstag und Bekanntmachung des Hinweises auf die Patenterteilung: **13.08.2025**
(21) Anmeldenummer: 20172771.6
(22) Anmeldetag: 04.05.2020
(51) Int. Cl.: F02M 35/022, F02M 35/08, F02M 35/16

(54) **ZENTRIFUGALLUFTFILTER FÜR EIN FAHRZEUGSYSTEM**
CENTRIFUGAL AIR FILTER FOR A VEHICLE SYSTEM
FILTRE À AIR CENTRIFUGE POUR UN SYSTÈME DE VÉHICULE

(30) Priorität: 07.05.2019 DE 102019003209
(43) Veröffentlichungstag der Anmeldung: 11.11.2020
(73) Patentinhaber: Deere & Company, Moline, IL 61265 (US)
(72) Erfinder: YUEN, MING PARKER, 68163 Mannheim (DE); SANANIKONE, PHOUPHADETH, 68163 Mannheim (DE); ESAU, DIERK, 68163 Mannheim (DE); BERG, ALEXANDER, 68163 Mannheim (DE)
(74) Vertreter: Dehnhardt, Florian Christopher

(56) Entgegenhaltungen:
- EP-A2- 1 950 407
- DE-A1- 10 235 761
- US-A1- 2001 052 289
- US-A1- 2016 341 158

## Beschreibung

Die Erfindung betrifft einen Zentrifugalluftfilter für ein Fahrzeugsystem.

Derartige Zentrifugalluftfilter finden typischerweise als Grobfilter zur Vorreinigung der Ladeluft von Dieselmotoren, die mit einem Turbolader ausgestattetet sind, Verwendung und sind z.B. aus DE 102 35 761 A1, US 2016/341158 A1, EP 1 950 407 A2 oder US 2001/052289 A1 bekannt.

Hierzu umfasst der Zentrifugalluftfilter eine Vielzahl von Einzelabscheidern, die einen hindurchtretenden Luftstrom in eine Wirbelbewegung versetzen, sodass im Luftstrom enthaltene Partikel aufgrund der dabei verursachten Zentrifugalkräfte in einen die Einzelabscheider umgebenden Abscheidebereich geschleudert werden. In den Abscheidebereich mündet ein an einem umgebenden Filtergehäuse vorgesehener Anschlussstutzen, an dem ein Unterdruck aufbaubar ist, sodass sich die im Abscheidebereich befindlichen Partikel nach außen absaugen lassen. Aufgrund der Schwerkraft sammeln sich diese jedoch vorwiegend in einem bezüglich der jeweiligen Einbau- oder Betriebslage unten liegenden Filtergehäuseabschnitt an. Um eine möglichst vollständige Absaugung zu erzielen, wäre der Anschlussstutzen daher idealerweise in diesem Bereich anzuordnen. Beengte Platzverhältnisse wie auch damit verbundene Einbaubedingungen verhindern dies in aller Regel, sodass sich der Ansaugstutzen häufig an einer diesbezüglich ungünstigen Stelle am Filtergehäuse befindet. Meist genügt der am Anschlussstutzen aufgebaute statische Unterdruck dann nicht, um ein Absetzen der Partikel innerhalb des Filtergehäuses auf Dauer zu verhindern. Gerade unter staubigen Umgebungsbedingungen macht dies ein häufiges umständliches Zerlegen des Zentrifugalluftfilters zum Zwecke der manuellen Reinigung erforderlich.

Es ist daher Aufgabe der vorliegenden Erfindung, einen Zentrifugalluftfilter der eingangs genannten Art dahingehend weiterzubilden, dass dieser eine verlässliche Absaugung abgeschiedener Partikel auch für den Fall insofern ungünstiger Einbaubedingungen sicherstellt.

Diese Aufgabe wird durch einen Zentrifugalluftfilter mit den Merkmalen des Patentanspruchs 1 gelöst.

Der Zentrifugalluftfilter für ein Fahrzeugsystem umfasst eine Vielzahl von Einzelabscheidern, die einen hindurchtretenden Luftstrom in eine Wirbelbewegung versetzen, sodass im Luftstrom enthaltene Partikel aufgrund der dabei verursachten Zentrifugalkräfte in einen die Einzelabscheider umgebenden Abscheidebereich geschleudert werden und sich schwerkraftbedingt in einem bezüglich einer vorgegebenen Einbau- oder Betriebslage unten liegenden Filtergehäuseabschnitt ansammeln, wobei in den Filtergehäuseabschnitt ein Ansaugstutzen mündet, der über eine Absaugleitung mit einem an einem Filtergehäuse austretenden Anschlussstutzen verbunden ist.

Die Absaugleitung erlaubt es, den Ansaugstutzen bzw. dessen Mündung unmittelbar in dem bezüglich der vorgegebenen Einbau- oder Betriebslage unten liegenden Filtergehäuseabschnitt anzuordnen, sodass eine Ablagerung von Partikeln wirksam unterbunden wird. Der Anschlussstutzen kann sich an einer beliebigen anderen Stelle des Filtergehäuses befinden. Auf diese Weise ist eine verlässliche Absaugung der abgeschiedenen Partikel auch für den Fall insofern ungünstiger Einbaubedingungen sichergestellt.

Der am Anschlussstutzen erforderliche Unterdruck wird beispielsweise in einem niederdruckseitigen Ansaugbereich eines von einer Lüfterhutze umgebenen Radiallüfters aufgebaut, der Bestandteil einer von dem Fahrzeugsystem umfassten Kühlanordnung ist. Hierzu steht der Anschlussstutzen über eine flexible Gummischlauchleitung mit einem an der Lüfterhutze ausgebildeten Unterdruckanschluss in Verbindung. Die solchermaßen im Abscheidebereich des Zentrifugalluftfilters abgesaugten Partikel werden anschließend über den vom Radiallüfter erzeugten Kühlluftstrom in die Umgebung abtransportiert.

Bei dem Fahrzeugsystem handelt es sich beispielsweise um ein mit einem aufgeladenen Dieselmotor ausgestattetes geländegängiges Nutzfahrzeug aus dem Landwirtschafts-, Forst- oder Baumaschinenbereich.

Vorteilhafte Ausgestaltungen des erfindungsgemäßen Zentrifugalluftfilters gehen aus den Unteransprüchen hervor.

Vorzugsweise kann die Absaugleitung innerhalb des Filtergehäuses platzsparend zwischen den Einzelabscheidern oder aber entlang einer Seitenwandung und damit außerhalb des Wirkungsbereichs der Einzelabscheider verlaufen. Die Absaugleitung wie auch der daran ausgebildete Ansaugstutzen können einstückiger Bestandteil des als Kunststoffspritzgussteil hergestellten Filtergehäuses sein. Alternativ handelt es sich um ein separates Bauteil, das sich zum Zwecke der Reinigung aus dem Filtergehäuse entnehmen lässt.

In einem solchen Fall ist es denkbar, dass das Filtergehäuse mehrschalig aufgebaut ist und einen den Abscheidebereich freigebenden abnehmbaren Gehäusedeckel aufweist. Der Gehäusedeckel ist beispielsweise mittels eines verriegelbaren Bajonettverschlusses mit einem Filterbasisgehäuse verbunden.

Der Zentrifugalluftfilter findet insbesondere als Grobfilter zur Vorreinigung von mittels eines Turboladers zu verdichtender Ladeluft eines Dieselmotors Verwendung. Ein dem Zentrifugalluftfilter nachgeschalteter (mehrstufiger) Feinfilter dient der Beseitigung verbleibender Verunreinigungen, bevor die Ladeluft dem Turbolader und anschließend dem Ansaugtrakt des Dieselmotors zugeführt wird. Hierbei sei angemerkt, dass der Zentrifugalluftfilter ebenso gut auch in beliebigem anderen Zusammenhang eingesetzt werden kann, so zum Beispiel als Bestandteil eines Luftfiltersystems einer Kabinenlüftung oder zur Grobfilterung der einem beliebigen anderen Verbrennungsantrieb zugeführten Verbrennungsluft, wie einem Saugmotor ohne Aufladung, einem Benzinmotor oder einer Gasturbine. Insofern sind dem Anwendungsbereich des Zentrifugalluftfilters keine Grenzen gesetzt.

Der erfindungsgemäße Zentrifugalluftfilter für ein Fahrzeugsystem wird im Folgenden anhand der beigefügten Zeichnungen näher erläutert. Hierbei sind übereinstimmende bzw. bezüglich ihrer Funktion vergleichbare Komponenten mit denselben Bezugszeichen gekennzeichnet. Es zeigen:
- Fig. 1: ein Ausführungsbeispiel des erfindungsgemäßen Zentrifugalluftfilters als Bestandteil eines Fahrzeugsystems, und
- Fig. 2: eine vereinfacht dargestellte Innenansicht des Zentrifugalluftfilters aus Fig. 1.

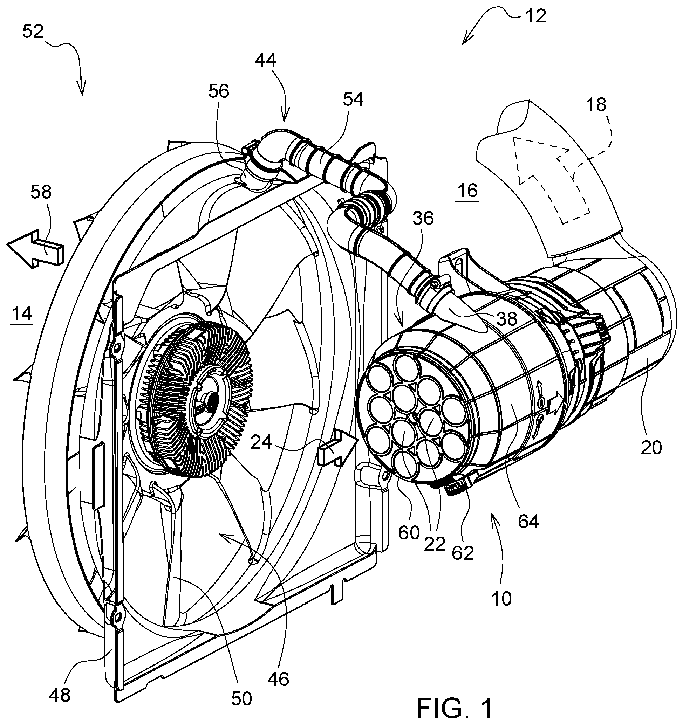

Fig. 1 zeigt ein Ausführungsbeispiel des erfindungsgemäßen Zentrifugalluftfilters 10 als Bestandteil eines Fahrzeugsystems 12, von dem aus Gründen der Übersichtlichkeit lediglich die für die Funktion des Zentrifugalluftfilters 10 maßgeblichen Komponenten gezeigt sind.

Bei dem Fahrzeugsystem 12 handelt es sich beispielsweise um ein mit einem aufgeladenen Dieselmotor 14 ausgestattetes geländegängiges Nutzfahrzeug aus dem Landwirtschafts-, Forst- oder Baumaschinenbereich.

Der Zentrifugalluftfilter 10 findet hierbei als Grobfilter zur Vorreinigung von mittels eines Turboladers 16 zu verdichtender Ladeluft 18 Verwendung. Ein dem Zentrifugalluftfilter 10 nachgeschalteter (mehrstufiger) Feinfilter 20 dient der Beseitigung verbleibender Verunreinigungen, bevor die Ladeluft 18 dem Turbolader 16 und anschließend dem Ansaugtrakt des Dieselmotors 14 zugeführt wird.

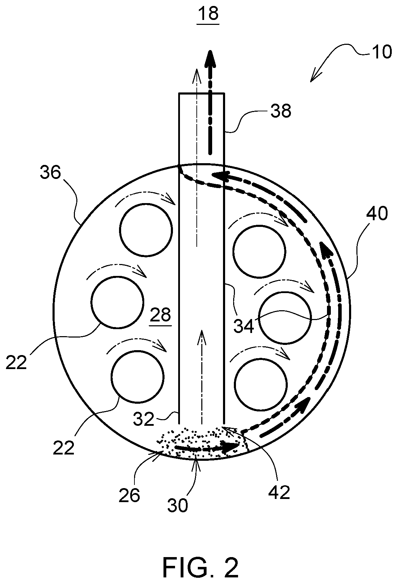

Wie in Fig. 2 zu erkennen ist, umfasst der in Fig. 1 wiedergegebene Zentrifugalluftfilter 10 eine Vielzahl von Einzelabscheidern bzw. Zyklonen 22, die einen hindurchtretenden Luftstrom 24 in eine Wirbelbewegung versetzen, sodass im Luftstrom 24 enthaltene Partikel 26 aufgrund der dabei verursachten Zentrifugalkräfte in einen die Zyklonen 22 umgebenden Abscheidebereich 28 geschleudert werden und sich schwerkraftbedingt in einem bezüglich einer vorgegebenen Einbau- oder Betriebslage unten liegenden Filtergehäuseabschnitt bzw. Bodenbereich 30 ansammeln. In den Bodenbereich 30 mündet ein Ansaugstutzen 32, der über eine rohrförmige Absaugleitung 34 mit einem an einem Filtergehäuse 36 austretenden Anschlussstutzen 38 verbunden ist.

Beispielsgemäß verläuft die Absaugleitung 34 innerhalb des Filtergehäuses 36 platzsparend zwischen den Zyklonen 22 und nimmt dabei den kürzestmöglichen Weg zwischen dem Bodenbereich 30 und dem Anschlussstutzen 38. Entsprechend der gestrichelten Darstellung kann diese aber auch entlang einer Seitenwandung 40 und damit außerhalb des Wirkungsbereichs der Zyklonen 22 verlaufen. Die Absaugleitung 34 wie auch der daran ausgebildete Ansaugstutzen 32 sind einstückiger Bestandteil des als Kunststoffspritzgussteil hergestellten Filtergehäuses 36.

Die Absaugleitung 34 erlaubt es, den Ansaugstutzen 32 bzw. dessen Mündung 42 unmittelbar im Bodenbereich 30 anzuordnen, sodass eine Ablagerung von Partikeln 26 wirksam unterbunden wird. Der Anschlussstutzen 38 kann sich an einer beliebigen anderen Stelle des Filtergehäuses 36 befinden, sodass eine verlässliche Absaugung der abgeschiedenen Partikel 26 auch für den Fall insofern ungünstiger Einbaubedingungen sichergestellt ist. Im vorliegenden Fall befindet sich der Anschlussstutzen 38 an einer Oberseite 44 des Filtergehäuses 36.

Der zum Absaugen der Partikel 26 erforderliche Unterdruck wird dabei in einem niederdruckseitigen Ansaugbereich 46 eines von einer Lüfterhutze 48 umgebenen Radiallüfters 50 aufgebaut, der Bestandteil einer von dem Fahrzeugsystem 12 umfassten Kühlanordnung 52 ist (die übrigen der Kühlanordnung 52 zuzuordnenden Komponenten, wie Wärmetauscher, Kühlmittelleitungen und dergleichen, sind in Fig. 1 weggelassen). Im vorliegenden Fall ist die Absaugleitung 34 über eine an dem Anschlussstutzen 38 angebrachte flexible Gummischlauchleitung 54 mit einem an der Lüfterhutze 48 ausgebildeten Unterdruckanschluss 56 verbunden. Die über die Gummischlauchleitung 54 im Abscheidebereich 28 bzw. Bodenbereich 30 des Zentrifugalluftfilters 10 abgesaugten Partikel 26 werden anschließend über den vom Radiallüfter 50 erzeugten Kühlluftstrom 58 in die Umgebung abtransportiert.

Um den Abscheidebereich 28 bei Bedarf reinigen zu können, ist das Filtergehäuse 36 mehrschalig aufgebaut und weist einen den Abscheidebereich 28 freigebenden abnehmbaren Gehäusedeckel 60 auf. Der Gehäusedeckel 60 ist hierbei mittels eines über ein Betätigungselement 62 verriegelbaren Bajonettverschlusses mit einem Filterbasisgehäuse 64 verbunden.

## Patentansprüche

1. Zentrifugalluftfilter für ein Fahrzeugsystem, mit einer Vielzahl von Einzelabscheidern (22), die einen hindurchtretenden Luftstrom (24) in eine Wirbelbewegung versetzen, sodass im Luftstrom (24) enthaltene Partikel (26) aufgrund der dabei verursachten Zentrifugalkräfte in einen die Einzelabscheider (22) umgebenden Abscheidebereich (28) geschleudert werden und sich schwerkraftbedingt in einem bezüglich einer vorgegebenen Einbau- oder Betriebslage unten liegenden Filtergehäuseabschnitt (30) ansammeln, **dadurch gekennzeichnet, dass** in den Filtergehäuseabschnitt (30) ein über eine rohrförmige Absaugleitung (34) mit einem an einem Filtergehäuse (36) austretenden Anschlussstutzen (38) verbundener Ansaugstutzen (32) mündet.

2. Zentrifugalluftfilter nach Anspruch 1, **dadurch gekennzeichnet, dass** die Absaugleitung (34) innerhalb des Filtergehäuses (36) zwischen den Einzelabscheidern (22) verläuft.

3. Zentrifugalluftfilter nach Anspruch 1, **dadurch gekennzeichnet, dass** die Absaugleitung (34) entlang einer Seitenwandung (40) innerhalb des Filtergehäuses (36) verläuft.

4. Zentrifugalluftfilter nach wenigstens einem der vorhergehenden Ansprüche, **dadurch gekennzeichnet, dass** das Filtergehäuse (36) mehrschalig aufgebaut ist und einen den Abscheidebereich (28) freigebenden abnehmbaren Gehäusedeckel (60) aufweist.

5. Zentrifugalluftfilter nach wenigstens einem der vorhergehenden Ansprüche, **gekennzeichnet durch** eine Verwendung als Grobfilter zur Vorreinigung von mittels eines Turboladers (16) zu verdichtender Ladeluft (18) eines Dieselmotors (14).

## Claims

1. Centrifugal air filter for a vehicle system, having a multiplicity of individual separators (22), which set an air flow (24) passing through them into a turbulent motion, so that particles (26) contained in the air flow (24) are flung into a separation region (28) surrounding the individual separators (22), on account of the centrifugal forces thus generated, and collect by gravity in a filter housing portion (30) that lies below a predefined installation or operating position, **characterized in that** a suction nozzle (32) connected via a tubular suction line (34) to a connecting nozzle (38) emerging from a filter housing (36) opens into the filter housing portion (30).

2. Centrifugal air filter according to Claim 1, **characterized in that** the suction line (34) runs inside the filter housing (36) between the individual separators (22).

3. Centrifugal air filter according to Claim 1, **characterized in that** the suction line (34) runs along a side wall (40) inside the filter housing (36).

4. Centrifugal air filter according to at least one of the preceding claims, **characterized in that** the filter housing (36) is of multilayer construction and has a housing cover (60) which can be removed to expose the separation region (28).

5. Centrifugal air filter according to at least one of the preceding claims, **characterized by** a use as a coarse filter for the pre-cleaning of charge air (18) of a diesel engine (14) to be compressed by means of a turbocharger (16).

## Revendications

1. Filtre à air centrifuge pour un système de véhicule, avec une pluralité de séparateurs individuels (22) qui mettent en mouvement tourbillonnaire un flux d'air (24) qui les traverse, de telle sorte que des particules (26) contenues dans le flux d'air (24) sont projetées, en raison des forces centrifuges ainsi provoquées, dans une zone de séparation (28) entourant les séparateurs individuels (22) et s'accumulent, en raison de la force de gravité, dans une section de corps de filtre (30) située en bas par rapport à une position de montage ou de fonctionnement prédéterminée, **caractérisé en ce qu'**une tubulure d'aspiration (32) reliée par l'intermédiaire d'une conduite d'aspiration tubulaire (34) à une tubulure de raccordement (38) sortant d'un corps de filtre (36) débouche dans la section de corps de filtre (30).

2. Filtre à air centrifuge selon la revendication 1, **caractérisé en ce que** la conduite d'aspiration (34) s'étend à l'intérieur du corps de filtre (36) entre les séparateurs individuels (22).

3. Filtre à air centrifuge selon la revendication 1, **caractérisé en ce que** la conduite d'aspiration (34) s'étend le long d'une paroi latérale (40) à l'intérieur du corps de filtre (36).

4. Filtre à air centrifuge selon au moins l'une quelconque des revendications précédentes, **caractérisé en ce que** le corps de filtre (36) est construit sous forme multicouche et présente un couvercle de corps amovible (60) libérant la zone de séparation (28).

5. Filtre à air centrifuge selon au moins l'une quelconque des revendications précédentes, **caractérisé par** une utilisation en tant que filtre grossier pour la pré-épuration de l'air de suralimentation (18) d'un moteur diesel (14) à comprimer au moyen d'un turbocompresseur (16).
